# EUROPÄISCHE PATENTSCHRIFT

(11) **EP 0 492 377 B1**
(45) Veröffentlichungstag und Bekanntmachung des Hinweises auf die Patenterteilung: **21.05.1997**
(21) Anmeldenummer: 91121653.9
(22) Anmeldetag: 17.12.1991
(51) Int. Cl.: C08G 77/06, C08J 3/03

(54) **Verfahren zur Herstellung von Organopolysiloxanhydrosolen**
Process for the production of organopolysiloxane hydrosols
Procédé de préparation d'hydrosols d'organopolysiloxane

(30) Priorität: 28.12.1990 DE 4042141
(43) Veröffentlichungstag der Anmeldung: 01.07.1992
(73) Patentinhaber: WACKER-CHEMIE GMBH, D-81737 München (DE)
(72) Erfinder: Mautner, Konrad, Dr., W-8261 Kastl (DE); Deubzer, Bernward, Dr., W-8263 Burghausen (DE); Oswaldbauer, Helmut, W-8299 Stubenberg-Fürstberg (DE); Sinner, Hilmar, W-8263 Burghausen (DE)

(56) Entgegenhaltungen:
- EP-A- 0 195 936
- EP-A- 0 202 679
- EP-A- 0 335 414

## Beschreibung

Die Erfindung betrifft ein Verfahren zur Herstellung von Organopolysiloxanhydrosolen sowie deren Verwendung.

Verfahren zur Herstellung von Organopolysiloxanhydrosolen sind vielfach bekannt. Hierzu sei beispielsweise auf US 3,433,780 (ausgegeben 18. März 1969, J. Cekada, Jr. und D.R. Weyenberg, Dow Corning Corporation) und US 4,424,297 (ausgegeben 3. Januar 1984, A.E. Bey, Dow Corning Corporation) verwiesen. In diesen Veröffentlichungen wird die Herstellung kolloidaler Suspensionen von Organosilsesquioxanen mit einer durchschnittlichen Teilchengröße von 10 bis 100 nm beschrieben, in dem Trialkoxysilane unter Bewegung einem Gemisch aus Wasser und oberflächenaktiven Mitteln zugegeben werden, wobei die Menge der zugefügten Trialkoxysilane weniger als etwa 10 Gewichtsprozent, bezogen auf das Gesamtgewicht von Trialkoxysilan, Wasser und oberflächenaktiven Mitteln, beträgt oder wobei die Zugabegeschwindigkeit weniger als 10 Mol Trialkoxysilan pro Liter je Stunde beträgt. Des weiteren wird in DE-OS 37 17 075 (M. Wolfgruber, Wacker-Chemie GmbH, ausgegeben am 8. Dezember 1988) bzw. der entsprechenden US-PS 4,857,582 ein kontinuierliches Verfahren zur Herstellung kolloidaler Suspensionen von Organopolysiloxanen, die aus mindestens zwei verschiedenen Siloxaneinheiten, wie Monoorganosiloxan-, Diorganosiloxan- und Triorganosiloxaneinheiten sowie SiO_{4/2}-Einheiten aufgebaut sind, offenbart, bei dem voneinander getrennt Organosiliciumverbindung und Wasser einem Reaktor zugeführt werden, wobei die Dosiergeschwindigkeit von Organosiliciumverbindung höchstens 5 Mol je Stunde und Liter Wasser beträgt.

Es bestand die Aufgabe, ein Verfahren bereitzustellen, welches es erlaubt, Organopolysiloxanhydrosole auf relativ einfache Art und Weise herzustellen. Diese Aufgabe wird durch die Erfindung gelöst.

Gegenstand der Erfindung ist ein Verfahren zur Herstellung von Organopolysiloxanhydrosolen durch Vermischen von Organosiliciumverbindung mit Wasser, dadurch gekennzeichnet, daß Silan der Formel

RₐSi(OR¹)₄₋ₐ (I),

wobei
- a: 0, 1, 2 oder 3 ist,
- R: gleich oder verschieden sein kann, ein Wasserstoffatom oder einen einwertigen organischen Rest und
- R¹: gleich oder verschieden sein kann und einen einwertigen organischen Rest bedeutet,
und/oder dessen Teilhydrolysat
sowie gegebenenfalls Organodisiloxan der Formel

R² ₃Si-O-SiR² ₃ (II),

wobei R² gleich oder verschieden sein kann und eine für R angegebene Bedeutung hat,
mit Wasser in Gegenwart von Emulgator unterhalb einer Temperatur von 15 °C vermischt wird.

Bei dem Rest R handelt es sich vorzugsweise um Wasserstoffatom oder einen einwertigen Kohlenwasserstoffrest mit 1 bis 9 Kohlenstoffatom(en), der gegenüber Wasser inerte Substituenten aufweisen kann.

Beispiele für Kohlenwasserstoffreste als Rest R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste als Rest R sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl- und N-(2-Aminoethyl)-3-amino(2-methyl)propylrest; Aminoarylreste, wie der Aminophenylrest; Acyloxyalkylreste, wie der 3-Acryloxypropyl- und 3-Methacryloxypropylrest; Hydroxyalkylreste, wie der propylrest; und Reste der Formel 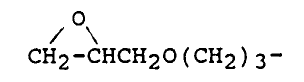 und

HOCH₂CH(OH)CH₂SCH₂CH₂-.

Bei dem Rest R handelt es sich besonders bevorzugt um Wasserstoffatom sowie um den Methyl-, Vinyl-, 3-Chlorpropyl- und 3-Mercaptopropylrest, insbesondere um den Methyl- und den Vinylrest.

Bei dem Rest R¹ handelt es sich bevorzugt um Alkylgruppen mit 1 bis 6 Kohlenstoffatom(en), welche mit Alkyloxygruppen oder Hydroxygruppen substituiert sein können.

Beispiele für Reste R¹ sind die für R angegebenen Alkylreste mit 1 bis 6 Kohlenstoffatom(en) sowie der Methoxyethylen- und Ethoxyethylenrest.

Bei dem Rest R¹ handelt es sich besonders bevorzugt um den Methyl- und den Ethylrest, insbesondere um den Methylrest.

Bevorzugt hat a die Bedeutung von 1 oder 2, durchschnittlich bevorzugt von 1,0 bis 1,5, besonders bevorzugt 1.

Bei den im erfindungsgemäßen Verfahren eingesetzten Silanen der Formel (I) handelt es sich bevorzugt um Methyltrimethoxysilan, Vinyltrimethoxysilan, 3-Mercaptopropyltrimethoxysilan, 3-Chlorpropyltrimethoxysilan, Hydrogentriethoxysilan, Dimethyldiethoxysilan und Dimethyldimethoxysilan, wobei Methyltrimethoxysilan und Vinyltrimethoxysilan besonders bevorzugt eingesetzt werden.

Bei den im erfindungsgemäßen Verfahren eingesetzten Silanen der Formel (I) kann es sich um eine einzelne Art derartiger Silane wie auch um ein Gemisch aus mindestens zwei verschiedenen Arten derartiger Silane handeln.

Wird bei dem erfindungsgemäßen Verfahren Teilhydrolysat des Silans der Formel (I) eingesetzt, so handelt es sich hierbei vorzugsweise um solches mit höchstens 5 Siliciumatomen je Teilhydrolysat.

Bei dem erfindungsgemäßen Verfahren wird Silan der Formel (I) und/oder dessen Teilhydrolysat in Mengen von vorzugsweise bis 40 Gewichtsprozent, besonders bevorzugt 20 bis 30 Gewichtsprozent, jeweils bezogen auf das Gewicht an eingesetztem Wasser, eingesetzt.

Beispiele für Rest R² sind alle die für den Rest R angegebenen Beispiele, wobei R² bevorzugt die Bedeutung von Methyl- und Vinylrest hat.

Beispiele für gegebenenfalls eingesetztes Organodisiloxan sind Hexamethyldisiloxan, Tetramethyldihydrogendisiloxan, Tetramethyldivinyldisiloxan.

Falls Organodisiloxan mitverwendet wird, handelt es sich bevorzugt um Hexamethyldisiloxan und Tetramethyldivinyldisiloxan.

Falls Organodisiloxan mitverwendet wird, wird es vorzugsweise in Mengen bis 10 Gewichtsprozent, besonders bevorzugt bis 5 Gewichtsprozent, jeweils bezogen auf die Gesamtmenge an eingesetztem Silan, eingesetzt.

Bei dem im erfindungsgemäßen Verfahren gegebenenfalls eingesetzten Organodisiloxan kann es sich um eine einzelne Art eines derartigen Organodisiloxans wie auch um ein Gemisch aus mindestens zwei verschiedenen Arten eines derartigen Organodisiloxans handeln.

Die im erfindungesgemäßen Verfahren eingesetzten benötigten Emulgatoren umfassen Carbonsäuren mit 9 bis 20 Kohlenstoffatomen, aliphatisch substituierte Benzolsulfonsäuren mit mindestens 6 Kohlenstoffatomen in den aliphatischen Substituenten, aliphatisch-substituierte Naphthalinsulfonsäuren mit mindestens 4 Kohlenstoffatomen in den aliphatischen Substituenten, aliphatische Sulfonsäuren mit mindestens 6 Kohlenstoffatomen in den aliphatischen Substituenten, Silylalkylsulfonsäuren mit mindestens 6 Kohlenstoffatomen in den Alkylsubstituenten, aliphatisch-substituierte Diphenylethersulfonsäuren mit mindestens 6 Kohlenstoffatomen in den aliphatischen Substituenten und Alkylhydrogensulfate mit mindestens 6 Kohlenstoffatomen in den Alkylsubstituenten.

Vorteilhafterweise werden als anionische Emulgatoren solche verwendet, deren aliphatische Substituenten mindestens 8 und insbesondere 12 Kohlenstoffatome enthalten. Spezielle Beispiele für aliphatische Substituenten sind Octyl-, Decyl-, Dodecyl-, Cetyl-, Stearyl-, Myricyl-, Oleyl-, Nonenyl-, Octinyl-, Phythyl- und Pentadecadienylreste. Als anionische Emulgatoren sind aliphatisch substituierte Benzolsulfonsäuren bevorzugt.

Bei dem erfindungsgemäßen Verfahren wird Emulgator vorzugsweise in Mengen von 0,5 bis 30 Gewichtsprozent, besonders bevorzugt in Mengen von 2 bis 5 Gewichtsprozent, jeweils bezogen auf das Gesamtgewicht an eingesetzter Organosiliciumverbindung, verwendet.

Bei dem im erfindungsgemäßen Verfahren eingesetzten Emulgator kann es sich um eine einzelne Art wie auch um ein Gemisch aus mindestens zwei verschiedenen Arten eines derartigen Emulgators handeln.

Zusätzlich zu Silan der Formel (I), dessen Teilhydrolysate, gegebenenfalls Organodisiloxan, Emulgator und Wasser können bei dem erfindungsgemäßen Verfahren bis zu 30 Gewichtsprozent, bezogen auf das Gesamtgewicht an eingesetzter Organosiliciumverbindung, weitere Komponenten, wie beispielsweise Neutraltenside, Schutzkolloide und Verdickungsmittel, eingesetzt werden.

Beispiele für Neutraltenside sind Fettsäureethoxylate, wie beispielsweise (EO)ₙ-Stearate mit n gleich 8 bis 100, Fettalkoholethoxylate, wie beispielsweise Stearyl-, Lauryl-, Cetyl-, Oleyl- und Isotridecyl-(EO)ₙ mit n gleich 2 bis 100 und ethoxylierte Alkylphenole, wie beispielsweise Octyl- und Nonylphenol-(EO)ₙ mit n gleich 4 bis 30.

Beispiele für Schutzkolloide sind Polyvinylalkohole.

Beispiele für Verdickungsmittel sind Polyacrylate.

Bei dem erfindungsgemäßen Verfahren können die einzelnen Komponenten auf beliebige Art und Weise miteinander vermischt werden.

Bei dem erfindungsgemäßen Verfahren wird das Vermischen von Silan der Formel (I) und/oder dessen Teilhydrolysat, Wasser, Emulgator sowie gegebenenfalls Organodisiloxan und weiteren Komponenten bei einer Temperatur unterhalb 15°C, bevorzugt unterhalb 5°C durchgeführt, wobei als Untergrenze die Temperatur knapp oberhalb des Festpunktes anzusehen ist, bei der die erfindungsgemäße Mischung zum überwiegenden Teil gerade noch flüssig ist. Bei der Temperaturuntergrenze handelt es sich dabei vorzugsweise um Temperaturen bei etwa 0°C. Vorzugsweise wird das Vermischen beim Druck der umgebenden Atmosphäre, also zwischen 900 und 1100 hPa durchgeführt. Es kann aber auch bei höheren oder niedrigeren Drücken durchgeführt werden. Vorzugsweise wird die so erhaltene Mischung noch über einen Zeitraum von vorzugsweise 30 Minuten bis 9 Stunden bei einer Temperatur unterhalb von 15°C, bevorzugt unterhalb von 5°C gehalten. Vorteilhafterweise wird im Anschluß daran die entstandene Verbindung der Formel R¹OH - dabei handelt es sich vorzugsweise um Alkanol - mit R¹ gleich der obengenannten Bedeutung entfernt. Falls die entstandene Verbindung der Formel R¹OH mit R¹ gleich der obengenannten Bedeutung entfernt wird, ist ein Stehenlassen der erhaltenen Mischung bei einer Temperatur unterhalb von 15°C, bevorzugt unterhalb von 5°C, für einen Zeitraum von 30 Minuten bis 5 Stunden völlig ausreichend.

Bei dem erfindungsgemäßen Verfahren wird bevorzugt Wasser in einem Reaktor, der mit einer Vorrichtung zum Kühlen des Reaktorinhalts ausgestattet sein kann, vorgelegt und mit Silan der Formel (I) und/oder dessen Teilhydrolysat versetzt. Eine Mischvorrichtung ist im allgemeinen nicht notwendig, kann jedoch selbstverständlich angewendet werden. Silan der Formel (I) und/oder dessen Teilhydrolysat wird mit einer solchen Geschwindigkeit zudosiert, daß die Temperatur des erhaltenen Gemisches unterhalb 15°C, bevorzugt unterhalb 5°C liegt. Dies kann beispielsweise dadurch erfolgen, daß die Dosiergeschwindigkeit des Silans der Formel (I) und/oder dessen Teilhydrolysats über einen Temperaturfühler gesteuert wird und/oder ein Teil des eingesetzten Wassers in Form von Eis vorgelegt wird. Der Emulgator, gegebenenfalls eingesetztes Organodisiloxan sowie gegebenenfalls eingesetzte weitere Komponenten können dabei sowohl einzeln als auch im Gemisch mit dem Wasser oder zusammen mit dem erfindungsgemäß eingesetzten Silan der Formel (I) eingesetzt werden, wobei vorzugsweise Emulgator im Gemisch mit dem Wasser im Reaktor vorgelegt wird, Organodisiloxan im Gemisch mit Silan der Formel (I) zugegeben wird und die weiteren Komponenten mit Wasser und Emulgator vorgelegt werden.

Bei einer bevorzugten Ausführungsform des erfindungsgemäßen Verfahrens wird ein Gemisch aus Wasser und Emulgator mit einer Temperatur unterhalb von 5°C in einem Reaktor vorgelegt und mit Silan der Formel (I) und/oder dessen Teilhydrolysat gegebenenfalls im Gemisch mit Organodisiloxan versetzt, wobei die Temperatur der so erhaltenen Mischung 5°C nicht übersteigen soll. Diese Mischung wird nun noch 30 Minuten bis 2 Stunden auf einer Temperatur unterhalb von 5°C gehalten und im Anschluß daran die entstandene Verbindung der Formel R¹OH - dabei handelt es sich vorzugsweise um Alkanol - mit R¹ gleich der obengenannten Bedeutung destillativ entfernt. Dies erfolgt vorzugsweise bei einer Temperatur zwischen 15 und 30°C und einem Druck zwischen 15 und 100 hPa. Hierfür sind beispielsweise Dünnschichtverdampfer geeignet.

Das erfindungsgemäße Verfahren wird unter sauren Bedingungen durchgeführt, vorzugsweise im Bereich von pH 1,5 bis pH 3,0.

Nach dem erfindungsgemäßen Verfahren werden kolloidale, wäßrige Dispersionen von Organopolysiloxanen aus Einheiten der Formel

R³ ₓSiO_{(4-x)/2} (III)

hergestellt, wobei R³ gleich oder verschieden sein kann und eine der oben für R angegebenen Bedeutungen hat und x gleich 0, 1, 2, oder 3, durchschnittlich 0,9 bis 2,1, ist. Als Beispiele für Rest R³ gelten in vollem Umfang alle für Rest R obengenannten Beispiele.

Obwohl durch Formel (III) nicht dargestellt, können in den Organopolysiloxanen bis zu 5 Molprozent der Reste R³ durch Reste -OR⁴ ersetzt sein, wobei R⁴ eine oben für R¹ genannte Bedeutung hat.

Die erfindungsgemäß hergestellten Organopolysiloxanhydrosole haben einen Teilchendurchmesser von durchschnittlich 10 bis 500 nm, vorzugsweise 20 bis 250 nm, besonders bevorzugt 20 bis 150 nm, und einen Feststoffgehalt an Organopolysiloxanen von bis zu 20 Gewichtsprozent, vorzugsweise 10 bis 15 Gewichtsprozent, jeweils bezogen auf das Gesamtgewicht des Organopolysiloxanhydrosols, wobei der maximal mögliche Feststoffgehalt im Hydrosol abhängig ist von den SiC-gebundenen organischen Resten in den Organopolysiloxanen.

Das erfindungsgemäße Verfahren hat den Vorteil, daß auf einfache Weise und reproduzierbar Organopolysiloxanhydrosole hergestellt werden können, die eine enge und monodisperse Teilchengrößenverteilung aufweisen, wobei die Teilchengröße insbesondere über die geeignete Wahl der Temperatur gezielt variiert werden kann. Die erfindungsgemäßen Hydrosole von Organopolysiloxanen haben darüberhinaus den Vorteil, daß sie lagerstabil sind, wobei der Ausdruck "lagerstabil" bedeutet, daß die Hydrosole mindestens 12 Monate lagerfähig sind, ohne daß erkennbar Abscheidungen auftreten.

Die erfindungsgemäß hergestellten Hydrosole sind für viele Anwendungen direkt einsetzbar, jedoch können die in ihnen enthaltenen Organopolysiloxane, falls gewünscht, auch auf jede denkbare Art aus dem Hydrosol isoliert werden, z.B. durch Salzzugabe, Fällung durch polare Lösungsmittel oder Verdampfen des Wassers.

Die erfindungsgemäß hergestellten Hydrosole von Organopolysiloxanen sind für Imprägnier- und Beschichtungszwecke einsetzbar, beispielsweise im Bautenschutz zur Putzhydrophobierung oder bei der Papier- und Textilbehandlung. Darüberhinaus lassen sich aus den erfindungsgemäßen Hydrosolen von Organopolysiloxanen, die aus R³SiO_{3/2}- und R³₂SiO_{2/2}-Einheiten oder aus SiO_{4/2}- und R³₂SiO_{2/2}-Einheiten bestehen, wobei R³ jeweils die oben dafür angegebene Bedeutung hat, durch Entfernen des Wassers bei Raumtemperatur und einem Druck zwischen 900 und 1100 hPa oder unter reduziertem Druck oder bei erhöhter Temperatur nicht redispergierbare, transparente Harzfilme erzeugen.

Die erfindungsgemäßen Hydrosole von Organopolysiloxanen aus R³SiO_{3/2}-Einheiten, wobei R³ die oben dafür angegebene Bedeutung hat, sind sehr gut geeignet als Textilausrüstungsmittel zur Hydrophobierung und Faserstabilisierung, als hydrophobierender Bestandteil von Bautenschutzmitteln und in Abmischungen mit Kautschuklatices zur Einbringung der kolloidalen Partikel als aktive, verstärkende Füllstoffe.

Die erfindungsgemäßen Hydrosole von Organopolysiloxanen eignen sich ferner als Pfropfgrundlage für die Pfropfung von in Wasser radikalisch polymerisierbare Thermoplasten, wie beispielsweise Polyvinylchlorid, Polyvinylacetat, Polyvinylmethacrylat und Polystyrol. Besonders bevorzugt sind dabei Hydrosole von Organopolysiloxanen aus R³SiO_{3/2}- und R³₂SiO_{2/2}-Einheiten mit R³ gleich eine der obengenannten Bedeutung, die darüberhinaus elastomere Eigenschaften aufweisen.

In den nachfolgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 1000 hPa durchgeführt. Im Folgenden soll unter der Bezeichnung Raumtemperatur eine Temperatur von 20°C verstanden werden.

### Beispiel 1

Zu einem Gemisch aus 750 g Eis, 699 g Wasser und 51 g Dodecylbenzolsulfonsäure (10 prozentig in Wasser ) wird in einer Portion ein Gemisch aus 270 g Methyltrimethoxysilan und 30 g Vinyltrimethoxysilan zugegeben. Die so erhaltene Mischung wird auf Raumtemperatur erwärmt und 4 Stunden bei Raumtemperatur gehalten. Es wird ein milchig-weißes Organopolysiloxanhydrosol mit elektronenmikroskopisch ermittelten Teilchengrößen von 60 nm bei einer monodispersen Teilchengrößenverteilung und einem Feststoffgehalt von 8,3 Prozent, bezogen auf das Gesamtgewicht des Hydrosols, erhalten. Das Organopolysiloxanhydrosol ist lagerbeständig, das heißt, es treten auch nach 12-monatiger Lagerung keine erkennbaren Abscheidungen auf, und hinterläßt beim Verdampfen des Wassers bei Raumtemperatur und dem Druck der umgebenden Atmosphäre ein nicht redispergierbares Harzpulver.

### Beispiel 2

Die in Beispiel 1 beschriebene Verfahrensweise wird wiederholt mit der Abänderung, daß nach dem Mischvorgang nicht auf Raumtemperatur erwärmt wird, sondern die erhaltene Mischung für eine Dauer von 2 Stunden bei einer Temperatur von 0°C gehalten und im Anschluß daran der entstandene Methanol an einem Dünnschichtverdampfer (50 hPa/30°C) abdestilliert wird. Es wird ein klares Organopolysiloxanhydrosol mit elektronenmikroskopisch ermittelten Teilchengrößen von 24 nm bei einer monodispersen Teilchengrößenverteilung und einem Feststoffgehalt von 10 Prozent, bezogen auf das Gesamtgewicht des Hydrosols, erhalten. Das Organopolysiloxanhydrosol ist lagerbeständig, das heißt, es treten auch nach 12-monatiger Lagerung keine erkennbaren Abscheidungen auf, und hinterläßt beim Verdampfen des Wassers bei Raumtemperatur und dem Druck der umgebenden Atmosphäre ein nicht redispergierbares Harzpulver.

### Beispiel 3

Die in Beispiel 1 beschriebene Verfahrensweise wird wiederholt mit der Abänderung, daß nach dem Mischvorgang nicht auf Raumtemperatur erwärmt wird, sondern die erhaltene Mischung für eine Dauer von 9 Stunden auf einer Temperatur von 0°C gehalten wird. Es wird ein klares Organopolysiloxanhydrosol mit elektronenmikroskopisch ermittelten Teilchengrößen von 25 nm bei einer monodispersen Teilchengrößenverteilung und einem Feststoffgehalt von 8,3 Prozent, bezogen auf das Gesamtgewicht des Hydrosols, erhalten. Das Organopolysiloxanhydrosol ist lagerbeständig, das heißt, es treten auch nach 12-monatiger Lagerung keine erkennbaren Abscheidungen auf, und hinterläßt beim Verdampfen des Wassers bei Raumtemperatur und dem Druck der umgebenden Atmosphäre ein nicht redispergierbares Harzpulver.

### Beispiel 4

Zu einem Gemisch aus 100 g Eis, 91,6 g Wasser und 8,4 g Dodecylbenzolsulfonsäure (10 prozentig in Wasser ) werden in einer Portion 56 g Methyltrimethoxysilan zugegeben. Die so erhaltene Mischung wird für eine Dauer von 2 Stunden bei einer Temperatur von 3°C gehalten und im Anschluß daran der entstandene Methanol an einem Dünnschichtverdampfer (50 hPa/30°C) abdestilliert wird. Es wird ein milchig-weißes Organopolysiloxanhydrosol mit elektronenmikroskopisch ermittelten Teilchengrößen von 120 nm bei einer monodispersen Teilchengrößenverteilung und einem Feststoffgehalt von 14 Prozent, bezogen auf das Gesamtgewicht des Hydrosols, erhalten. Das Organopolysiloxanhydrosol ist lagerbeständig, das heißt, es treten auch nach 12-monatiger Lagerung keine erkennbaren Abscheidungen auf, und hinterläßt beim Verdampfen des Wassers bei Raumtemperatur und dem Druck der umgebenden Atmosphäre ein nicht redispergierbares Harzpulver.

### Beispiel 5

Zu einem Gemisch aus 125 g Eis, 125 g Wasser und 2,5 g Dodecylbenzolsulfonsäure (10 prozentig in Wasser ) wird in einer Portion ein Gemisch aus 40,3 g Dimethyldimethoxysilan und 0,5 g Hexamethyldisiloxan zugegeben. Die so erhaltene Mischung wird für eine Dauer von 30 Minuten bei einer Temperatur von 0°C gehalten und im Anschluß daran der entstandene Methanol an einem Dünnschichtverdampfer (15 hPa/15°C) abdestilliert. Es wird ein milchig-weißes polysiloxanhydrosol mit elektronenmikroskopisch ermittelten Teilchengrößen von 109 nm bei einer monodispersen Teilchengrößenverteilung und einem Feststoffgehalt von 7,5 Prozent, bezogen auf das Gesamtgewicht des Hydrosols, erhalten. Das Organopolysiloxanhydrosol ist lagerbeständig, das heißt, es treten auch nach 12-monatiger Lagerung keine erkennbaren Abscheidungen auf, und hinterläßt beim Verdampfen des Wassers bei Raumtemperatur und dem Druck der umgebenden Atmosphäre ein Dimethylpolysiloxanöl mit einer Viskosität von 48 mPa·s (20°C).

### Beispiel 6

Die in Beispiel 5 beschriebene Verfahrensweise wird wiederholt mit der Abänderung, daß anstelle des Gemischs aus 40,3 g Dimethyldimethoxysilan und 0,5 g Hexamethyldisiloxan ein Gemisch aus 4 g Methyltrimethoxysilan und 72,5 Dimethyldimethoxysilan eingesetzt wird. Es wird ein opaleszierendes Organopolysiloxanhydrosol mit elektronenmikroskopisch ermittelten Teilchengrößen von 53 nm bei einer monodispersen Teilchengrößenverteilung und einem Feststoffgehalt von 9,1 Prozent, bezogen auf das Gesamtgewicht des Hydrosols, erhalten. Das Organopolysiloxanhydrosol ist lagerbeständig, das heißt, es treten auch nach 12-monatiger Lagerung keine erkennbaren Abscheidungen auf, und hinterläßt beim Verdampfen des Wassers bei Raumtemperatur und dem Druck der umgebenden Atmosphäre einen weichen, elastischen Film.

### Beispiel 7

In einem isoliertem Glasgefäß wird eine Mischung aus 1449 g Wasser und 51 g Dodecylsulfonsäure (10 prozentig in Wasser) mit Hilfe eines Kryostaten mit Tauchkühler bei 0°C abgekühlt. Zu dieser Mischung werden innerhalb von 4 Minuten 300 g Methyltrimethoxysilan zugepumpt, wobei die Kühlleistung des Kryostaten so gewählt wird, daß die Temperatur des so erhaltenen Gemisches eine Temperatur von 3°C nicht übersteigt. Anschließend wird die Mischung für eine Dauer von 2 Stunden auf einer Temperatur von 0°C gehalten und im Anschluß daran der entstandene Methanol an einem Dünnschichtverdampfer (50 hPa/30°C) abdestilliert. Es wird ein klares Organopolysiloxanhydrosol mit elektronenmikroskopisch ermittelten Teilchengrößen von 23 nm bei einer monodispersen Teilchengrößenverteilung und einem Feststoffgehalt von 10,6 Prozent, bezogen auf das Gesamtgewicht des Hydrosols, erhalten. Das Organopolysiloxanhydrosol ist lagerbeständig, das heißt, es treten auch nach 12-monatiger Lagerung keine erkennbaren Abscheidungen auf, und hinterläßt beim Verdampfen des Wassers bei Raumtemperatur und dem Druck der umgebenden Atmosphäre ein sprödes, nicht redispergierbares Harzpulver.

### Vergleichsversuch 1

Zu einem Gemisch aus 191,6 g Wasser und 8,6 g Dodecylbenzolsulfonsäure (10 prozentig in Wasser) werden bei einer Temperatur von 20°C in einer Portion 56 g Methyltrimethoxysilan gegeben. Die so erhaltene, klare Mischung erwärmt sich dabei auf 50°C. Nach einer Stunde Stehenlassen beginnt die Solbildung und nach etwa weiteren 30 Minuten treten Ausfällungen auf, die im Verlauf von 30 Minuten stark zunehmen.

## Patentansprüche

1. Verfahren zur Herstellung von Organopolysiloxanhydrosolen durch Vermischen von Organosiliciumverbindung mit Wasser, dadurch gekennzeichnet, daß
Silan der Formel
RₐSi(OR¹)₄₋ₐ (I),
wobei
a 0, 1, 2 oder 3 ist,
R gleich oder verschieden sein kann, ein Wasserstoffatom oder einen einwertigen organischen Rest und
R¹ gleich oder verschieden sein kann und einen einwertigen organischen Rest bedeutet,
und/oder dessen Teilhydrolysat
sowie gegebenenfalls
Organodisiloxan der Formel
R² ₃Si-O-SiR² ₃ (II),
wobei R² gleich oder verschieden sein kann und eine für R angegebene Bedeutung hat,
mit Wasser in Gegenwart von Emulgator unterhalb einer Temperatur von 15 °C vermischt wird.

2. Verfahren nach Anspruch 1, dadurch gekennzeichnet, daß das Vermischen unterhalb einer Temperatur von 5°C erfolgt.

3. Verfahren nach Anspruch 1 oder 2, dadurch gekennzeichnet, daß nach dem Vermischen die erhaltene Mischung über einen Zeitraum von 30 Minuten bis 9 Stunden bei einer Temperatur unterhalb 15°C gehalten wird.

4. Verfahren nach einem oder mehreren der Ansprüche 1 bis 3, dadurch gekennzeichnet, daß nach dem Vermischen die erhaltene Mischung über einen Zeitraum von 30 Minuten bis 9 Stunden bei einer Temperatur unterhalb 5°C gehalten wird.

5. Verfahren nach einem oder mehreren der Ansprüche 1 bis 4, dadurch gekennzeichnet, daß die entstandene Verbindung der Formel R¹OH, wobei R¹ einen einwertigen organischen Rest bedeutet, entfernt wird.

6. Verfahren nach einem oder mehreren der Ansprüche 1 bis 5, dadurch gekennzeichnet, daß Wasser und Emulgator mit einer Temperatur unterhalb von 5°C in einem Reaktor vorgelegt und mit Silan der Formel (I) und/oder dessen Teilhydrolysat gegebenenfalls im Gemisch mit Organodisiloxan versetzt wird, wobei die Temperatur der so erhaltenen Mischung 5°C nicht übersteigen soll, diese Mischung 30 Minuten bis 5 Stunden auf einer Temperatur unterhalb von 5°C gehalten wird und im Anschluß daran die entstandene Verbindung der Formel R¹OH, wobei R¹ einen einwertigen organischen Rest bedeutet, destillativ entfernt wird.

7. Verfahren nach einem oder mehreren der Ansprüche 1 bis 6, dadurch gekennzeichnet, daß es unter sauren Bedingungen durchgeführt wird.

8. Verfahren nach einem oder mehreren der Ansprüche 1 bis 7, dadurch gekennzeichnet, daß es im Bereich von pH 1,5 bis pH 3,0 durchgeführt wird.

9. Verfahren nach einem oder mehreren der Ansprüche 1 bis 8, dadurch gekennzeichnet, daß es sich bei dem Rest R in Formel (I) um einen solchen, ausgewählt aus der Gruppe bestehend aus Wasserstoffatom, Methyl-, Vinyl-, 3-Chlorpropyl- und 3-Mercaptopropylrest, handelt.

10. Verfahren nach einem oder mehreren der Ansprüche 1 bis 9, dadurch gekennzeichnet, daß es sich bei dem Organodisiloxan um solches, ausgewählt aus der Gruppe bestehend aus Hexamethyldisiloxan und Tetramethyldivinyldisiloxan handelt.

## Claims

1. Process for preparing organopolysiloxane hydrosols by mixing an organosilicon compound with water, characterized in that a silane of the formula
RₐSi(OR¹)₄₋ₐ (I)
where
a is 0, 1, 2 or 3,
R can be identical or different and is a hydrogen atom or a monovalent organic radical and
R¹ can be identical or different and is a monovalent organic radical,
and/or a partial hydrolysis product thereof
and, if appropriate, an organodisiloxane of the formula
R² ₃Si-O-SiR² ₃ (II)
where R² can be identical or different and is as defined for R,
is mixed with water in the presence of an emulsifier at a temperature below 15°C.

2. Process according to Claim 1, characterized in that the mixing is carried out at a temperature below 5°C.

3. Process according to Claim 1 or 2, characterized in that, after the mixing, the mixture obtained is kept at a temperature below 15°C for a period of 30 minutes to 9 hours.

4. Process according to one or more of Claims 1 to 3, characterized in that, after the mixing, the mixture obtained is kept at a temperature below 5°C for a period of 30 minutes to 9 hours.

5. Process according to one or more of Claims 1 to 4, characterized in that the resulting compound of the formula R¹OH, with R¹ being a monovalent organic radical, is removed.

6. Process according to one or more of Claims 1 to 5, characterized in that the water and emulsifier are first introduced into a reactor at a temperature below 5°C and the silane of the formula (I) and/or the partial hydrolysis product thereof, if appropriate as a mixture with an organodisiloxane, is added, during which the temperature of the mixture thus obtained should not exceed 5°C, this mixture is kept at a temperature below 5°C for 30 minutes to 5 hours and, subsequently thereto, the resulting compound of the formula R¹OH, with R¹ being a monovalent organic radical, is removed by distillation.

7. Process according to one or more of Claims 1 to 6, characterized in that it is carried out under acidic conditions.

8. Process according to one or more of Claims 1 to 7, characterized in that it is carried out in the range from pH 1.5 to pH 3.0.

9. Process according to one or more of Claims 1 to 8, characterized in that the radical R in the formula (I) is a radical selected from the group comprising a hydrogen atom, a methyl radical, a vinyl radical, a 3-chloropropyl radical and a 3-mercaptopropyl radical.

10. Process according to one or more of Claims 1 to 9, characterized in that the organodisiloxane is selected from the group comprising hexamethyldisiloxane and tetramethyldivinyldisiloxane.

## Revendications

1. Procédé de préparation d'hydrosols d'organopolysiloxane par mélange d'un composé organosilicique avec de l'eau, caractérisé en ce que le silane de formule
RₐSi(OR¹)₄₋ₐ (I)
où
a est 0, 1, 2 ou 3;
R peut être identique ou différent, représente un atome d'hydrogène ou un radical organique monovalent, et
R¹ peut être identique ou différent et représente un radical organique monovalent,
et/ou son hydrolysat partiel,
ainsi que facultativement,
l'organosiloxane de formule
R² ₃Si-O-SiR² ₃ (II)
où R² peut être identique ou différent et a une signification donnée pour R,
est mélangé avec de l'eau en présence d'un émulsionnant à une température inférieure à 15°C.

2. Procédé suivant la revendication 1, caractérisé en ce que le mélange se fait à une température inférieure à 5°C.

3. Procédé suivant la revendication 1 ou 2, caractérisé en ce qu'après le mélange, le mélange obtenu est maintenu à une température inférieure à 15°C pendant une période de 30 minutes à 9 heures.

4. Procédé suivant l'une ou plusieurs des revendications 1 à 3, caractérisé en ce qu'après le mélange, le mélange obtenu est maintenu à une température inférieure à 5°C pendant une période de 30 minutes à 9 heures.

5. Procédé suivant l'une ou plusieurs des revendications 1 à 4, caractérisé en ce que l'on écarte le composé formé R¹OH, où R¹ représente un radical organique monovalent.

6. Procédé suivant l'une ou plusieurs des revendications 1 à 5, caractérisé en ce que l'on dispose l'eau et l'émulsionnant dans un réacteur à une température inférieure à 5°C et que l'on ajoute le silane de formule (I) et/ou son hydrolysat partiel, facultativement en mélange avec l'organodisiloxane, où la température du mélange ainsi obtenu ne dépasse pas 5°C, on maintient ce mélange à une température inférieure à 5°C pendant 30 minutes à 5 heures et à la suite de cela, on élimine par distillation, le composé formé de formule R¹OH, où R¹ représente un radical organique monovalent.

7. Procédé suivant l'une ou plusieurs des revendications 1 à 6, caractérisé en ce qu'on le réalise dans des conditions acides.

8. Procédé suivant l'une ou plusieurs des revendications 1 à 7, caractérisé en ce qu'on le réalise dans un domaine de pH de 1,5 à 3,0.

9. Procédé suivant l'une ou plusieurs des revendications 1 à 8, caractérisé en ce que le radical R dans la formule (I) consiste en l'un de ceux choisis dans le groupe constitué de l'atome d'hydrogène, les radicaux méthyle, vinyle, 3-chloropropyle et 3-mercaptopropyle.

10. Procédé suivant l'une ou plusieurs des revendications 1 à 9, caractérisé en ce que l'organodisiloxane consiste en ceux choisis parmi le groupe constitué de l'hexaméthyldisiloxane et le tétraméthyldivinyldisiloxane.
